# EUROPÄISCHE PATENTSCHRIFT

(11) **EP 0 561 837 B1**
(45) Veröffentlichungstag und Bekanntmachung des Hinweises auf die Patenterteilung: **07.09.1994**
(21) Anmeldenummer: 91920748.0
(22) Anmeldetag: 29.11.1991
(51) Int. Cl.: B62D 25/08, B62D 29/00

(54) **TRAGSTRUKTUR EINER KAROSSERIE EINES PERSONENKRAFTWAGENS**
BEARING STRUCTURE FOR THE BODYWORK OF A PASSENGER CAR
STRUCTURE PORTEUSE D'UNE CARROSSERIE DE VEHICULE DE TOURISME

(30) Priorität: 20.12.1990 DE 4041023
(43) Veröffentlichungstag der Anmeldung: 29.09.1993
(73) Patentinhaber: AUDI AG, 85002 Ingolstadt (DE)
(72) Erfinder: KREIS, Gundolf, D-8072 Oberstimm (DE); ENNING, Norbert, D-8071 Denkendorf (DE); REITER, Karl, D-8071 Lenting (DE); TIMM, Heinrich, D-8070 Ingolstadt (DE)
(74) Vertreter: Engelhardt, Harald
(86) Internationale Anmeldenummer: EP9102266
(87) Internationale Veröffentlichungsnummer: WO9211165

(56) Entgegenhaltungen:
- EP-A- 0 291 385
- DE-C- 1 278 855
- US-A- 2 636 774
- PATENT ABSTRACTS OF JAPAN, Band 14, Nr. 572 (M-106), 19. Dezember 1990 & JP,A,2, 2 246 877 (MAZDA) 2 October 1990

## Beschreibung

Die Erfindung betrifft eine Tragstruktur einer Karosserie eines Personenkraftwagens nach dem Oberbegriff des Anspruchs 1.

Eine bekannte Tragstruktur einer Karosserie eines Personenkraftwagens enthält im Vorderwagen vordere, beidseitig verlaufende Längsträger mit darüber angeordneten Federbeinaufnahmen, die nach unten hin auf die Längsträger abgestützt sind.

Übliche selbsttragende Fahrzeugkarosserien für Personenkraftwagen sind, einschließlich der Tragstruktur, aus Blechteilen hergestellt. Träger mit Hohlprofilen werden dabei jeweils aus wenigstens zwei tiefgezogenen und miteinander verschweißten Blechen hergestellt. Auch die Federbeinaufnahmen sind aus Blechteilen hergestellt, dergestalt, daß sie in die Glockenstruktur tiefgezogener Radhäuser eingebettet sind. Diese Radhäuser bestehen aus offenen Blechschalen, die nach unten am Längsträger abgestützt und mit diesem verbunden sind, so daß zumeist nur eine einwandige, flächige Verbindung zwischen Federbeinaufnahme und senkrecht darunter liegendem Längsträger besteht. Der Kraftfluß wird dabei über die Flächenteile als Schubwände geleitet.

Im Bereich vor den Federbeinaufnahmen ist bei bekannten Tragstrukturen an den Längsträgern ein Hilfsrahmen als Aggregateträger mit vorderen Anschraubpunkten befestigt. Die erforderliche Steifigkeit der Tragstruktur im Bereich der Federbeinaufnahmen und eine stabile Abstützung des Hilfsrahmens an den Längsträgern an den vorderen Hilfsrahmenanschraubpunkten ist bei der vorstehenden Konstruktion, insbesondere für den Crashfall, nur durch aufwendige Verstärkungsmaßnahmen erreichbar.

Die zum Aufbau solcher selbsttragenden Karosserien verwendeten Stahlbleche werden im Tiefziehverfahren verformt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht.

In der konkret beschriebenen Ausführungsform nach diesem Stand der Technik ist die Federbeinaufnahme und deren Abstützung auf den zugeordneten Längsträger aus Blechteilen aufgebaut, entsprechend dem konventionellen Aufbau der eingangs beschriebenen, selbsttragenden Fahrzeugkarosserie, so daß die dort erläuterten Besonderheiten auch hier auftreten.

Es ist des weiteren eine Federbeinaufnahme und der Bereich eines Radkastens als selbsttragende Blechkonstruktion bekannt (Patent Abstracts of Japan, vol. 14, no. 572 & JP-A-2 246 877), mit einem auf die Blechwand des Radkastens aufgeschweißten U-Profil, so daß sich dadurch ein Hohlträger ergibt. Dieser Hohlträger verläuft vom Pfosten A an der Oberkante des Radkastens bis vor die Federbeinaufnahme und biegt dort schräg nach unten zum Längsträger ab. Die Bleche für die Federbeinaufnahme bilden u.a. auch einen Verbund mit diesem Hohlträger. Es soll somit bei einer selbsttragenden Blechkarosserie durch Blechteile jeweils ein Radhaus verstärkt werden.

Hierbei wird durch das Hohlprofil, dem Längsträger und der Abstützung der Federbeinaufnahme ein Kräftedreieck gebildet. Durch die zusätzliche Abstützung zum Pfosten A hin erfolgt bei einem Frontalaufprall eine Kraftaufteilung, einerseits über den Längsträger zum Schweller und Bodenbereich hin und andererseits über das Hohlprofil als Abstützträger, an der Federbeinaufnahme vorbei durch die Weiterführung des Hohlprofils als Federbeinträger an den oberen Bereich der Türsäule zum Dachbereich der Fahrgastzelle hin.

Bei dieser Ausführung werden jedoch nur geringe Kräfte vom Hohlprofil aufgenommen, da das Hohlprofil in seinem Verlauf als Abstützträger relativ weit horizontal nach vorne und dann fast senkrecht zum Längsträger hin verläuft. Dadurch ergibt sich nur in einem geringen Maße eine Kraftaufteilung. Das Hohlprofil neigt bei einer Frontalkollision eher zum Ausknicken mit geringer Energieaufnahmemöglichkeit.

Ein zweigeteilter Längsträger liegt hier nicht vor, so daß sich die Probleme bei der Verbindung von Längsträgerteilen nicht ergeben, insbesondere nicht in Verbindung mit der Tragstruktur aus Federbeinaufnahme, Abstützungsträger und Federbeinträger. Der Hilfsrahmenbefestigungspunkt ist daher unabhängig von dieser Tragstruktur gebildet.

Aufgabe der Erfindung ist es, eine gattungsgemäße Tragstruktur einer Karosserie eines Personenkraftwagens so weiterzubilden, daß mit kostengünstigen und einfachen Mitteln eine Montage der Tragstruktur erfolgen kann, wobei die Tragstruktur stabil ausgeführt ist und mehrere Funktionen gleichzeitig erfüllen kann.

Diese Aufgabe wird mit den Merkmalen des Anspruchs 1 gelöst.

Nach Anspruch 1 sind die Längsträger jeweils aus zwei hintereinanderliegenden und miteinander verbundenen Längsträgerteilen aufgebaut. Das erste Längsträgerteil hat dabei ein bestimmtes, erstes Querschnittsprofil und ist insgesamt mit geringerer Steifigkeit gegenüber dem zweiten Längsträgerteil, das ein zweites Querschnittsprofil aufweist, dimensioniert. Einem solchen, an sich bekannten Längsträgeraufbau liegt der Gedanke zugrunde, daß bei einem Frontalaufprall mit geringerer Aufprallenergie nur der vordere, erste Längsträgerteil verformt wird, während der nach hinten anschließende, zweite Längsträgerteil mit weiteren, angeschlossenen Rahmenteilen und Aggregaten unverformt bleibt. Die Schäden bei einem Frontalaufprall mit geringerer Aufprallenergie sind dadurch auf den vorderen Bereich der Karosserie begrenzt, so daß die Fahrgastzelle geschützt ist und bei einer Reparatur in der Tragstruktur nur jeweils das vordere, erste Längsträgerteil ausgewechselt werden muß. Die Verbindung dieser Längsträgerteile erfolgt zweckmäßig durch angrenzende Trägerenden formschlüssig übergreifende Schalenhälften, die miteinander verschweißt sind. An einer solchen Schalenhälfte, die als Gußteil ausgeführt ist, wird vorteilhaft ein Abstützungsträger mit angeformt, so daß dieser nicht eigens befestigt werden muß.

Der Abstützungsträger ist als Gußteil mit einem offenen Querschnitt und Verstärkungsrippen ausgebildet. Ein solches Gußteil kann mit Durchsetzungen, Wandstärkeanpassungen und Rippen konstruktiv so ausgelegt werden, daß es die Anforderungen an die Steifigkeit und an das Crashverhalten erfüllt. In einem vorderen Bereich der Längsträger vor den Federbeinaufnahmen ist üblicherweise ein Hilfsrahmen als Aggregateträger an vorderen Hilfsrahmenbefestigungspunkten befestigt. Vorteilhaft ist dieser Hilfsrahmenbefestigungspunkt am Fußpunkt des Gußteils bzw. am Anbindungspunkt des Abstützungsträgers mit dem Längsträger angebracht, so daß zusätzlich eine steife Abstützung des vorderen Hilfsrahmenbefestigungspunktes erreicht wird.

Durch die Verwendung dieser Gußschalenteile werden somit drei Funktionen, Abstützung des Federbeinträgers, Verbindung der beiden Längsträgerteile und Befestigungsmöglichkeit für den Hilfsrahmen, erreicht. Dies ermöglicht einen kostengünstigen Aufbau der Tragstruktur, da zusätzliche Vorrichtungen für diese Funktionen entfallen können. Durch die Gußschalenteile wird die Montage stark vereinfacht, da neben der einfachen Einbringung der Schalenteile zwischen die Längsträgerelemente auch geringe Relativabstände, die durch Fertigungstoleranzen entstehen können, ausgeglichen werden können. Neben dem verbesserten Crashverhalten der gestuft verformbaren Tragstruktur im Frontbereich eines Personenkraftwagens können nach erfolgtem Zusammenstoß einzelne Teile der Tragstruktur einfach ausgetauscht werden.

Wenn die Anbindung des Abstützungsträgers zu weit vorne am Längsträger gewählt wird, ist die Tragfunktion dieses Trägers für die Federbeinaufnahme nur gering und die Kraftübertragung auf die Federbeinaufnahme durch den spitzen Winkel zwischen Längsträger und Abstützungsträger ggfs. zu groß und das Deformationsverhalten des Vorderwagens zu steif. Andererseits ist bei einer Anbindung des Abstützungsträgers am Längsträger nur kurz vor der Federbeinaufnahme zwar die Tragfunktion für die Federaufnahme groß, eine Kraftaufteilung und eine zusätzliche Abstützung des Längsträgers sind aber nur noch gering. Nach Anspruch 2 ist es daher zweckmäßig, wenn der Abstützungsträger mit dem Längsträger etwa einen Winkel von 45° einschließt.

Mit den Merkmalen des Anspruchs 3 wird vorgeschlagen, anstelle der üblichen, einwandigen Abstützungen der Federbeinaufnahme nach unten zum Längsträger diese Abstützung mit einem geschlossenen Hohlprofil als Federbeinaufnahmeträger auszuführen. Ein solcher geschlossener Profilquerschnitt weist gegenüber einer offenen Blechschale eine wesentlich höhere Steifigkeit auf und kann im Crashfall mit Energie aufnehmen, wodurch die Tragfunktion und das Crashverhalten verbessert werden.

Zweckmäßig wird die Konstruktion nach Anspruch 4 so ausgeführt, daß der Federbeinaufnahmeträger in seiner Querschnittsbreite auf den darunterliegenden Längsträger aufgesetzt ist, wobei die Querschnittsbreite der Breite des Längsträgers entspricht.

Ein solcher Federbeinaufnahmeträger mit geschlossenem Hohlprofil kann nach Anspruch 5 in konventioneller Bauweise durch Blechschalenteile gebildet sein. Es kann jedoch auch ein Gußteil oder ein Strangprofilteil verwendet werden, wodurch bei entsprechender Dimensionierung die Steifigkeit weiter verbessert wird.

Bei einer Verwendung der erfindungsgemäßen Trägeranordnung in der Tragstruktur einer Karosserie mit Leichtmetall-Strangprofilen und Leichtmetall-Knotenelementen ist es nach Anspruch 6 vorteilhaft, auch die erfindungsgemäßen Träger und/oder die Federbeinaufnahme als Leichtmetall-Strangprofile bzw. Leichtmetall-Gußteile herzustellen.

Anhand einer Zeichnung werden Ausführungsbeispiele der Erfindung mit weiteren Einzelheiten, Merkmalen und Vorteilen näher erläutert.

Es zeigen
- Fig. 1: eine Seitenansicht der Tragstruktur im vorderen Bereich einer Karosserie,
- Fig. 2: eine Draufsicht auf die Tragstruktur nach Fig. 1 (ohne Federbeinaufnahme) und
- Fig. 3: eine vergrößerte Seitenansicht im Bereich der Federbeinaufnahme mit einem Abstützungsträger als Gußteil.

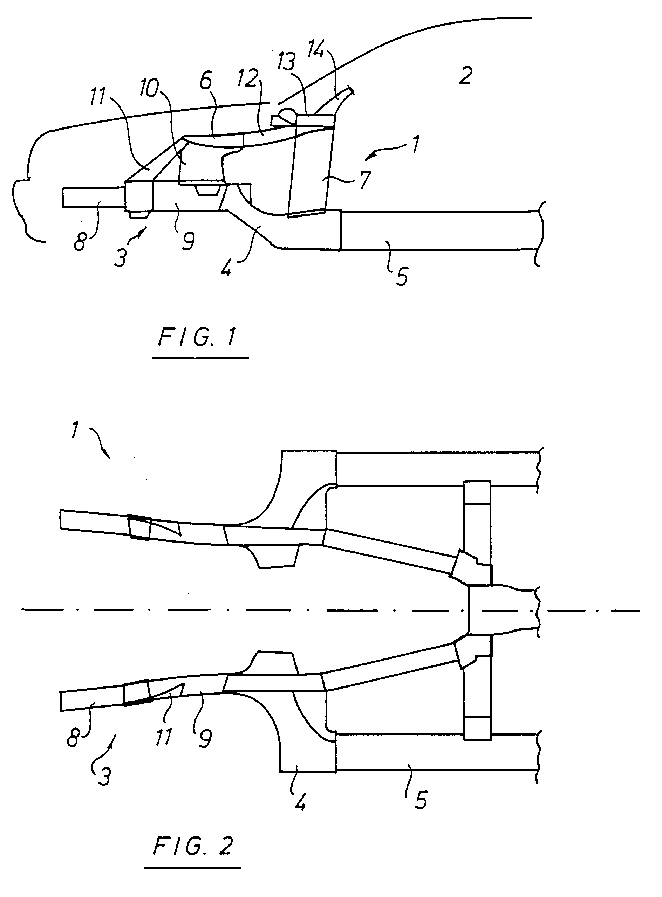

In Fig. 1 ist die Tragstruktur 1 im vorderen Bereich einer Karosserie 2 eines Personenkraftwagens in einer Seitenansicht dargestellt. Die Tragstruktur 1 besteht aus einem Längsträger 3, einem Verbindungselement 4 zu einem Schweller 5, einer Federbeinaufnahme 6 und einer vorderen Türsäule 7.

Der Längsträger 3 besteht aus zwei Längsträgerteilen 8 und 9, wobei beide Längsträgerteile 8 und 9 als Aluminium-Strangprofile ausgebildet sind und der vordere Längsträgerteil 8 gegenüber dem anschließenden Längsträgerteil 9 leichter deformierbar ist.

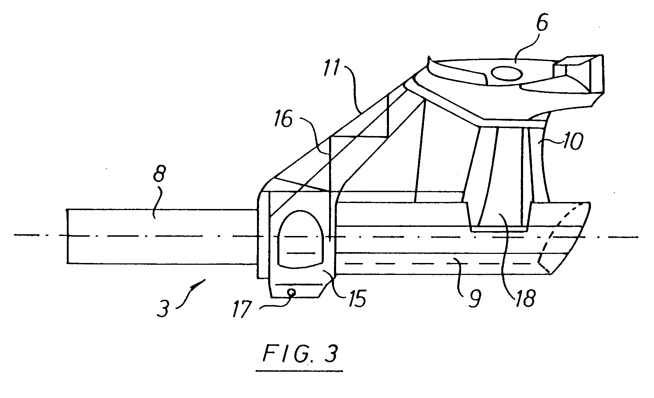

Die Federbeinaufnahme 6 ist über einen Federbeinaufnahmeträger 10 etwa senkrecht nach unten auf das Längsträgerteil 9 abgestützt. Zudem ist ein etwa im Winkel von 45° schräg verlaufender Abstützungsträger 11 vorgesehen, der zusätzlich die Federbeinaufnahme 6 nach vorne auf die Verbindung zwischen dem vorderen Längsträgerteil 8 und dem anschließenden Längsträgerteil 9 abstützt. Im einzelnen wird diese Anordnung im Zusammenhang mit der vergrößerten Ansicht nach Fig. 3 erläutert.

Die Federbeinaufnahme 6 ist zudem über einen weiteren Träger als Federbeinträger 12 mit einem Knotenelement 13 an der Türsäule 7 verbunden, wo auch ein vorderer, seitlicher Rahmenträger 14 der Dachkonstruktion angeschlossen ist.

In Fig. 2 ist die Tragstruktur 1 aus Fig. 1 in einer Draufsicht dargestellt (ohne Federbeinaufnahmen 6). Es sind auch hier wieder die Längsträger 3 bestehend aus den Längsträgerteilen 8 und 9 zu erkennen, die über die Verbindungselemente 4 mit den seitlichen Schwellern 5 verbunden sind. Weiter sind die schräg verlaufenden Abstützungsträger 11 eingezeichnet.

In Fig. 3 ist eine vergrößerte Teilansicht einer ersten Ausführungsform entsprechend der Fig. 1 gezeigt mit dem Längsträger 3 bestehend aus den Längsträgerteilen 8 und 9, der Federbeinaufnahme 6, dem Federbeinaufnahmeträger 10 und dem Abstützungsträger 11.

Die Verbindung zwischen den Längsträgerteilen 8 und 9 ist über ein oder mehrere Schalenteile durchgeführt, von denen eine Schalenhälfte 15 in Fig. 3 zu ersehen ist. Diese Schalenteile umgeben formschlüssig die beiden aneinandergrenzenden Trägerenden der Längsträgerteile 8 und 9 und sind untereinander und mit den Trägerenden verschweißt. Die Schalenteile sind als Gußteile ausgeführt, wobei an der Schalenhälfte 15 der Abstützungsträger 11 ebenfalls als Gußteil angeformt ist. Der Träger 11 weist ein offenes Profil mit Verstärkungsrippen 16 auf. An der Unterseite der Schalenhälfte 15 ist zudem ein vorderer Hilfsrahmenbefestigungspunkt 17 mit in das Gußteil integriert.

Der Federbeinaufnahmeträger 10 umfaßt ebenfalls ein geschlossenes Hohlprofil 18, das in seinem unteren Bereich der Breite des Längsträgerteils 9 angepaßt und auf diesen aufgesetzt ist.

Mit der beschriebenen Anordnung unter Verwendung des schräg verlaufenden Abstützungsträgers 11 und des Federbeinaufnahmeträgers 10 mit dem Hohlprofil 18 wird eine stabile und steife Tragstruktur im Bereich der Federbeinaufnahme 6 erhalten, die günstig auf das Deformationsverhalten eines bestimmten Frontalabschnitts eines Personenkraftwagens wirkt.

Zudem wird bei einem Frontcrash eine günstige Krafteinleitung erhalten, wie aus Fig. 1 zu ersehen ist. Die Krafteinleitung erfolgt hierbei in den Längsträger 3 über den vorderen Längsträgerteil 8, der als Rohr ausgeführt ist und ein Energieaufnahmeelement darstellt. Am Übergang zum Längsträgerteil 9 erfolgt eine Kraftaufteilung zum einen zur Federbeinaufnahme 6, die bevorzugt als Gußteil ausgeführt ist und über den Federbeinträger 12, der bevorzugt als Strangprofil ausgeführt ist, zum Zellendachbereich und zum andern über den Längsträgerteil 9 zum Bodenaufbau der Karosserie. Die Querschnitts- und Steifigkeitsverhältnisse sind so abgestimmt, daß ein abgestuftes Deformationsverhalten eintritt, das heißt bei niederer Crashgeschwindigkeit tritt eine Verformung der vorderen Längsträgerteile auf, bei höheren Crashgeschwindigkeiten setzt sich die Verformung weiter nach hinten fort.

## Patentansprüche

1. Tragstruktur einer Karosserie eines Personenkraftwagens mit einer Rahmenstruktur aus Trägern,
mit vorderen, beidseitig verlaufenden Längsträgern,
mit vorderen Federbeinaufnahmen, die oberhalb der Längsträger angeordnet sind und die über Abstützungen nach unten auf die Längsträger abgestützt sind,
mit jeweils einem Abstützungsträger, der zwischen Längsträger und Federbeinaufnahme angeordnet ist und der von einer Stelle, die am Längsträger vor der Federbeinaufnahme liegt, in einem bestimmten Winkel nach oben und zur Federbeinaufnahme verläuft und der mit dem Längsträger und der Federbeinaufnahme verbunden ist, so daß ein geschlossenes Kräftedreieck aus Längsträger, Abstützungsträger und Abstützung der Federbeinaufnahme nach unten zum Längsträger gebildet ist und
mit einem weiteren Träger als Federbeinträger, der die Federbeinaufnahme mit einem oberen Bereich der Türsäule verbindet bzw. mit einem oberen Knotenelement an der Türsäule, wo auch ein Rahmenträger der Dachkonstruktion angeschlossen ist, so daß bei einem Frontalaufprall eine Kraftaufteilung erfolgt, einerseits über den Längsträger zum Schweller und Bodenbereich hin und andererseits über den Abstützträger, die Federbeinaufnahme und deren Anbindung über den Federbeinträger am oberen Bereich der Türsäule zum Dachbereich (Rahmenträger der Dachkonstruktion) der Fahrgastzelle hin,
dadurch gekennzeichnet,
daß der Längsträger (3) aus zwei hintereinander liegenden Längsträgerteilen (8, 9) aufgebaut ist, die durch Schalenhälften (15) als Gußteile miteinander verbunden sind,
daß an einer Schalenhälfte (15) der Abstützungsträger (11) angeformt ist und der Abstützungsträger (11) einen offenen Querschnitt, bevorzugt mit Verstärkungsrippen (16), aufweist und als Gußteil ausgebildet ist und
daß ein Hilfsrahmenbefestigungspunkt (17) mit integriert ist.

2. Tragstruktur nach Anspruch 1, dadurch gekennzeichnet, daß der Abstützungsträger (11) mit dem Längsträger (3) einen Winkel von etwa 45° einschließt.

3. Tragstruktur nach Anspruch 1 oder 2, dadurch gekennzeichnet, daß die Abstützung der Federbeinaufnahme etwa vertikal nach unten zum Längsträger (3) als Federbeinaufnahmeträger (10) mit einem geschlossenen Hohlprofil (18) ausgebildet ist.

4. Tragstruktur nach Anspruch 3, dadurch gekennzeichnet, daß der Federbeinaufnahmeträger (10) in seiner Querschnittsbreite der Breite des Längsträgers (3) entspricht.

5. Tragstruktur nach Anspruch 4, dadurch gekennzeichnet, daß der Federbeinaufnahmeträger (10) durch Blechschalenteile oder ein Strangprofil oder ein Gußteil gebildet ist.

6. Tragstruktur nach einem der Ansprüche 1 bis 5, dadurch gekennzeichnet, daß die Träger (Längsträger 3, Abstützungsträger 11, Federbeinaufnahmeträger 10) und/oder die Federbeinaufnahme (6) aus Leichtmetall hergestellt sind.

## Claims

1. Load-bearing structure for a passenger car bodyshell with a frame structure made up of beams,
with frontal side-members extending on both sides,
with frontal spring strut locators which are arranged above the side-members and which are supported downwardly via supports onto the side-members,
with in each case a support beam which is arranged between the side-member and the spring strut locator and which extends, from a point situated on the side-member forward of the spring strut locator, at a given angle upwards and as far as the spring strut locator, and which is joined to the side-member and the spring-strut locator, thereby forming a closed triangle of forces consisting of the side-member, support beam and support for the spring strut locator downwardly as far as the side-member, and
with an additional beam to act as a spring strut beam, which joins the spring strut locator to an upper portion of the door pillar, or rather to an upper gusset element on the door pillar, at which point a frame member of the roof construction is also joined, with the result that in the event of a frontal impact the force is distributed on the one hand via the side-member to the sill beam and floor region and on the other hand via the support beam, the spring strut locator and its tie by way of the spring strut member on the upper portion of the door pillar towards the roof area (frame member of the roof construction) of the passenger compartment,
characterised in that
the side-member (3) is constructed from two side-member parts (8, 9) situated one behind the other, which are joined together by dish halves (15) in the form of castings,
the support beam (11) is formed on one dish half (15) and the support beam (11) has an open cross-section, preferably with strengthening ribs (16), and is in the form of a casting, and
integrated therewith is a subframe attachment point (17).

2. Load-bearing structure according to claim 1, characterised in that the support beam (11) encloses an angle of approximately 45° with the side-member (3).

3. Load-bearing structure according to claim 1 or 2, characterised in that the support for the spring strut locator is designed to run more or less vertically downwards to the side-member (3) in the form of a spring strut locator member (10) with a closed hollow profile (18).

4. Load-bearing structure according to claim 3, characterised in that the cross-sectional width of the spring strut locator member (10) is the same as the width of the side-member (3).

5. Load-bearing structure according to claim 4, characterised in that the spring strut locator member (10) is constituted by sheet-metal dish parts or else an extrusion or a casting.

6. Load-bearing structure according to any of claims 1 to 5, characterised in that the beams (side-member 3, support beam 11, spring strut locator member 10) and/or the spring strut locator (6) are fabricated from light metal.

## Revendications

1. Structure porteuse d'une carrosserie de voiture particulière à structure de châssis constituée par des poutrelles, comprenant
des longerons avant s'étendant des deux côtés,
des logements avant pour jambes de force à ressort, qui sont disposés au-dessus des longerons et prennent appui vers le bas sur les longerons par l'intermédiaire de supports,
une poutrelle de support qui est disposée entre chaque longeron et le logement pour jambe de force à ressort, s'étend suivant un angle déterminé vers le haut et vers le logement pour jambe de force à ressort, à partir d'un point qui est situé sur le longeron en avant du logement pour jambe de force à ressort, et est raccordée au longeron et au logement pour jambe de force à ressort, de sorte qu'il est formé, vers le bas en direction du longeron, un triangle de forces fermé, constitué par le longeron, la poutrelle de support et le support du logement pour jambe de force à ressort, et
une autre poutrelle qui sert aussi de support de jambe de force à ressort et qui relie le logement pour jambe de force à ressort à une partie supérieure du montant de porte ou à un élément de jonction supérieur sur le montant de porte, auquel est également raccordé un support du cadre de la structure de toit, de sorte qu'en cas de collision frontale, il se produit une répartition des forces, d'une part vers le seuil de la porte et la région du plancher par l'intermédiaire du longeron et, d'autre part, vers la région du toit (support du cadre de la structure de toit) de l'habitacle par l'intermédiaire de la poutrelle de support, du logement pour jambe de force à ressort et de la liaison de celui-ci à la partie supérieure du montant de porte par le support de jambe de force,
caractérisée
en ce que le longeron (3) est constitué par deux parties de longeron (8, 9) qui sont disposées l'une derrière l'autre et reliées l'une à l'autre par des demi-coquilles (15) sous forme de pièces de fonte,
en ce que la poutrelle de support (11) est formée d'une seule pièce avec une demi-coquille (15) et la poutrelle de support (11) présente une section transversale ouverte, de préférence avec des nervures de renfort (16), et est réalisée sous forme de pièce de fonte, et
en ce qu'un point (17) de fixation pour un faux-châssis est également intégré.

2. Structure porteuse selon la revendication 1, caractérisée en ce que la poutrelle de support (11) forme avec le longeron (3) un angle d'environ 45°.

3. Structure porteuse selon la revendication 1 ou 2, caractérisée en ce que le support du logement pour jambe de force à ressort est réalisé, à peu près verticalement vers le bas en direction du longeron (3), sous la forme d'un poteau de support (10) ayant un profil creux fermé (18).

4. Structure porteuse selon la revendication 3, caractérisée en ce que la largeur de la section transversale du support (10) du logement pour jambe de force à ressort correspond à la largeur du longeron (3).

5. Structure porteuse selon la revendication 4, caractérisée en ce que le support (10) du logement pour jambe de force à ressort est constitué par des parties de coquille en tôle, par un profilé filé ou par une pièce de fonte.

6. Structure porteuse selon l'une quelconque des revendications 1 à 5, caractérisée en ce que les poutrelles (longeron 3, poutrelle de support 11, support 10 du logement pour jambe de force à ressort) et/ou le logement (6) pour jambe de force à ressort sont fabriqués en métal léger.
